# EUROPÄISCHE PATENTANMELDUNG

(11) **EP 2 730 519 A1**
(43) Veröffentlichungstag der Anmeldung: **14.05.2014**
(21) Anmeldenummer: 13191516.7
(22) Anmeldetag: 05.11.2013
(51) Int. Cl.: B65D 81/34, B65D 75/58, A47J 36/24, A23L 1/48

(54) **Portionseinheit**

(30) Priorität: 08.11.2012 AT 5010612 U
(71) Anmelder: Jump On Food Konzeptentwicklung GmbH, 1010 Wien (AT)
(72) Erfinder: Palmetzhofer, Klaus, 1020 Wien (AT); Herman, Robert, 3400 Klosterneuburg (AT)
(74) Vertreter: Sonn & Partner Patentanwälte

(57) **Zusammenfassung**

Portionseinheit (1) sowie Kombination von Portionseinheiten und Verfahren zur Zubereitung von Lebensmitteln in einem verpackten Zustand, mit einem im Wesentlichen flüssigkeits- und luftdichten Behältnis (3), in dem vorgekochte Lebensmittel (A) aufgenommen sind, wobei das Behältnis (3) evakuiert, versiegelt und zum Tiefkühlen geeignet ist, und die vorgekochten Lebensmittel (A) ohne Beigabe von bei Raumtemperatur im flüssigen Zustand befindlicher oder sich bei einer Erwärmung auf zumindest 60 °C verflüssigender Bestandteile in dem Behältnis (3) verpackt sind.

## Beschreibung

Die Erfindung betrifft eine Portionseinheit bzw. eine Kombination von Portionseinheiten und ein Verfahren zur Zubereitung von Lebensmitteln in einem verpackten Zustand, mit einem im Wesentlichen flüssigkeits- und luftdichten Behältnis, in dem vorgekochte Lebensmittel aufgenommen sind, wobei das Behältnis evakuiert, versiegelt und zum Tiefkühlen geeignet ist.

Die Verwendung derartiger Portionseinheiten und Verfahren ist im Stand der Technik bekannt und wird in Verbindung mit der Zubereitung von Flüssigkeiten, Saucen oder anderen flüssigkeitshältigen Lebensmitteln beschrieben.

Die JP 07-237675 A zeigt einen hitzebeständigen Kochbeutel, der ein Nahrungsmittel und eine Aromaflüssigkeit enthält. Der Beutel wird nach dem Befüllen Vakuum-versiegelt und tiefgefroren oder zumindest gekühlt. Die Nahrungsmittel mit der Aromaflüssigkeit können im versiegelten Zustand in kochendem Wasser zubereitet werden.

Die US 2010/0178402 A1 zeigt einen Vakuum-versiegelten Kochbeutel für gefrorene Pasta-Sauce. Aufgrund dieser Verpackung kann die Sauce im Nudelwasser miterhitzt werden, während die Nudeln gewöhnlich, offen im Wasser zubereitet werden.

Die US 3,567,468 beschreibt die Verpackung und Zubereitung gefrorener, flüssigkeitshältiger Lebensmittel, die beim Auftauen Flüssigkeit abgeben, insbesondere Gemüse, in einem Kochbeutel. Hierfür wird eine beigegebene Sauce als trockene Saucenmischung verpackt, wobei die trockene Saucenmischung beispielsweise mit dem bereits gefrorenen Gemüse vakuumverpackt wird. Die Sauce erreicht somit erst bei der Zubereitung, sobald der Packungsinhalt eine Temperatur von 76 °C bis 82 °C durch die Aufnahme der abgegebenen Flüssigkeit erreicht, die zur Konsumation bestimmte flüssige Konsistenz.

Aus der US 3,407,078 A ist eine Verpackung für Donuts bekannt, wobei die frisch gebackenen, abgekühlten Donuts zusammen mit einer Glasur in einem Beutel verpackt werden. Die im Beutel mit verpackte Glasur ist bei Raumtemperatur löffelbar und schmilzt in einem vorgeheizten Ofen und in kochendem Wasser zu einem flüssigen Sirup.

Die FR 2 930 528 A1 offenbart eine Lebensmittelverpackung mit zwei Kammern von denen eine Kammer zur Aufbewahrung von Lebensmitteln samt Fett oder einer Sauce bestimmt ist.

Die US 4,835 942 A offenbart eine speziell geformte Schachtel zur Vakuum-Verpackung von Meeresfrüchten, welche in der Schachtel in einem Mikrowellenherd gekocht werden können.

Aus der US 3,465,873 A ist weiters eine Verpackung für Trockennahrung mit einem Flüssigkeitsbehälter bekannt. Bei Erhitzen des im Behälter enthaltenen Kochwassers durchbricht der entstehende Dampf eine Wand und rehydriert die enthaltenen Lebensmittel.

Gegenüber den bekannten Verpackungen soll die Erfindung eine Portionseinheit bereitstellen, die eine Vermischung der aufgenommenen Lebensmitteln mit einer Flüssigkeit oder Sauce in dem Behältnis bei der Zubereitung, bzw. solange das Behältnis versiegelt ist, vermeidet. Insbesondere soll eine Portionseinheit geschaffen werden, die im erwärmten und geschlossenen bzw. versiegelten Zustand über einen über die Zubereitungszeit hinausgehenden Zeitraum ohne Einbußen bei der Konsistenz des Lebensmittels warm gehalten werden kann.

Diese Aufgabe wird erfindungsgemäß dadurch gelöst, dass die vorgekochten Lebensmittel ohne Beigabe von bei Raumtemperatur im flüssigen Zustand befindlicher oder sich bei einer Erwärmung auf zumindest 60 °C verflüssigender Bestandteile in dem Behältnis verpackt sind. Zur Herstellung einer essfertigen Speise kann das verschlossene Behältnis in einem Wasserbad erwärmt werden, aus dem Wasserbad entnommen und geöffnet werden und mit einer bei Raumtemperatur flüssigen Speisekomponente kombiniert werden. Hierbei ist üblicherweise aus lebensmittelrechtlichen Gründen eine Erhitzung auf zumindest 75 °C erforderlich. Bei erfolgreicher Nachweisführung kann in Einzelfällen auch eine Erhitzungstemperatur unter 75 °C genehmigt werden; eine Erhitzung von zumindest 60 °C ist bei der Zubereitung von Lebensmitteln üblicherweise jedoch erforderlich. Erfindungsgemäß ist somit vorgesehen, dass auch bei einer Erhitzung im Rahmen der Zubereitung der Lebensmittel die in dem Behältnis aufgenommenen Lebensmittel nicht in einen flüssigen Zustand übergehen bzw. weder eine wesentliche Abgabe von Flüssigkeit noch eine wesentliche Aufnahme von Flüssigkeit durch die Lebensmittel erfolgt. Daher kann die versiegelte Portionseinheit auch über mehrere Stunden, beispielsweise in einem Wasserbad, heiß gelagert werden, ohne die Qualität der Lebensmittel wesentlich zu verändern.

Wenn als Lebensmittel im Wesentlichen aus Kohlenhydraten bestehende Lebensmittel, insbesondere Teigwaren, Reis oder Kartoffel, vorgesehen sind, sind dies Lebensmittel, die bei einem Kochvorgang in einem Wasserbad im Rahmen einer herkömmlichen Zubereitung gerade nicht über einen längeren Zeitraum heiß gelagert werden können, da diese Lebensmittel fortlaufend Wasser aufnehmen. Daher muss bei derartigen Lebensmitteln üblicherweise eine genau Kochzeit eingehalten werden, um ein qualitativ hochwertiges Geschmackserlebnis zu erzielen. Dies bedeutet allerdings, dass Portionseinheiten derartiger Lebensmittel im Gastronomiebetrieb üblicherweise erst nach Bestellung frisch zubereitet werden müssen, um die vorgegebene Kochzeit exakt einhalten zu können; hierdurch werden jedoch erhebliche Wartezeiten verursacht, welche insbesondere im sog. Fast-Food-Bereich nicht akzeptabel sind. Mit Hilfe der erfindungsgemäßen Ausgestaltung können Portionseinheiten mit derartigen Lebensmitteln vorteilhafterweise über eine vergleichsweise langen Zeitraum in einem Wasserbad heiß gehalten werden, ohne dass die im Behältnis aufgenommenen Lebensmittel Wasser aufnehmen würden und daher ihre Konsistenz verändern würden. Somit ist es günstigerweise sofort nach Bestellung möglich, die - üblicherweise im Wasserbad - heiß gehaltenen Lebensmittel mit der gewünschten Bissfestigkeit einem Kunden anzubieten, im Wesentlichen unabhängig davon wie lange die erfindungsgemäße Portionseinheit bereits erhitzt wurde. Somit können im Wesentlichen aus Kohlenhydraten bestehende Lebensmittel vorteilhafterweise auch im sog. Fast-Food-Bereich in hoher Qualität und ohne erhebliche Wartezeiten für die Kunden angeboten werden.

Im Zusammenhang mit der Zubereitung von Teigwaren in der vorliegenden Portionseinheit, ist es günstig, wenn die Teigwaren als Emulgator Sojalecithin aufweisen, da somit einem Verkleben der Teigwaren beim Erwärmen entgegengewirkt werden kann bzw. ein nachträgliches Auflockern erleichtert wird.

Es können aber als Lebensmittel auch Gemüse, Früchte, Fleisch, Tofu oder dergleichen, insbesondere zusätzlich zu den kohlenhydrathaltigen Lebensmitteln, vorgesehen sein, sofern diese eine ausreichende Temperaturbeständgikeit aufweisen. Lebensmittel, die beim Auftauen signifikante Mengen an Flüssigkeit abgeben, z.B. weil flüssigkeitshaltige Strukturen beim Einfrieren zerstört wurden, sind für die vorliegende Portionseinheit ungeeignet, da die abgegebene Flüssigkeit bei längerem Warmhalten die Konsistenz der Lebensmittel beeinträchtigt.

Damit das Behältnis bei den üblichen zum Erwärmen verwendeten Temperaturen dicht bleibt, ist es günstig, wenn das Behältnis bis mindestens 75 °C, bevorzugt bis mindestens 100 °C, hitzebeständig ist. Dadurch wird außerdem eine Verunreinigung des Wasserbads oder eine Vermischung von Teilen des Behältnisses mit den Lebensmitteln vermieden.

Um Farbe und Geschmack der Lebensmittel günstig zu beeinflussen, kann das Behältnis neben den Lebensmitteln auch Restsauerstoff oder modifizierte Atmosphäre enthalten. Dabei kann die ansonsten verbleibende Restluft gezielt durch bestimmte Gase ersetzt werden, so dass chemische Vorgänge, die zu einem Abbau wichtiger Inhaltsstoffe oder zu Verfärbungen führen würden, gehemmt werden können.

Wenn mit dem Behältnis eine Grifflasche und eine Halterung, bevorzugt einstückig, verbunden ist, kann die Handhabung der Portionseinheit vereinfacht werden, da die Grifflasche nach der Erwärmung bzw. der Entnahme aus dem Wasserbad an der Umgebungsluft rasch abkühlt und mit bloßen Händen angefasst bzw. gehalten werden kann. Ebenso wird durch die Grifflasche und die Halterung die Einbringung in das Wasserbad erleichtert.

Das Behältnis kann vorteilhaft eine Öffnungshilfe, insbesondere einen V-Schnitt oder einen Y-Schnitt, aufweisen, wodurch ein rasches Öffnen und somit eine rasche Zubereitung ermöglicht und die Verbrennungsgefahr beim Öffnen verringert wird.

Es hat sich als günstig herausgestellt, dass das Behältnis mithilfe einer Siegelnaht verschlossen ist. Die Siegelnaht ist geeignet, das evakuierte Behältnis rasch und ohne Beeinträchtigung der darin enthaltenen Lebensmittel zu verschließen und erfüllt die Anforderungen an die Temperaturfestigkeit der Portionseinheit sowohl beim Tiefkühlen als auch beim Erhitzen.

Ebenfalls aufgrund seiner Temperaturbeständigkeit und außerdem aufgrund seiner Lebensmittelechtheit ist es vorteilhaft, wenn das Behältnis aus Nylon bzw. LLDPE (Linear Low Density Polyethylen) hergestellt ist. Dabei hat sich eine Wandstärke des Behältnisses von 80 bis 90 µm als vorteilhaft herausgestellt, da damit ein geeigneter Kompromiss zwischen mechanischer Festigkeit und Widerstandsfähigkeit und geringen Materialkosten, sowie guter Wärmeübertragung erzielt wird.

Zur effizienten Herstellung und Zubereitung der Portionseinheit ist es günstig, wenn das Behältnis samt Lebensmittelfüllung flach bzw. abgeflacht ist und eine Dicke von 1 bis 2 cm aufweist. Aufgrund der relativ zum Lebensmittelvolumen geringen Dicke kann beim Tiefkühlen die Kälte und bei der Zubereitung die Wärme die Lebensmittel rasch und gleichmäßig durchdringen.

Wenn das Behältnis samt Lebensmittelfüllung im Wesentlichen quaderförmig mit vier schmalen und zwei breiten Seiten ist, kann eine platzsparende Lagerung sowie eine optimale Raumnutzung eines Wasserbads erzielt werden, da quaderförmige Körper im Wesentlichen ohne Zwischenräume stapelbar und schlichtbar sind. Dabei ist es zur Anpassung an vorhandene Küchengeräte nützlich, wenn die breiten Seiten des Behältnisses eine Breite zwischen 10 und 15 cm und eine Höhe zwischen 18 und 23 cm aufweisen.

Wenn das Behältnis an zumindest einer schmalen Seite einen flachen Randabschnitt mit einer Breite von bis zu 50 mm aufweist, lässt sich das Behältnis besonders einfach im Bereich des Randabschnitts versiegeln. Dabei kann der Randabschnitt bevorzugt eine Öffnungshilfe und/oder eine Ausnehmung zur Bildung einer Grifflasche oder Halterung aufweisen, so dass keine separaten Teile an dem Behältnis befestigt werden müssen. Das erleichtert die Herstellung und senkt die Produktionskosten der vorliegenden Portionseinheit.

Eine für die Zubereitung von Einzelportionen geeignete Portionseinheit kann bereitgestellt werden, wenn das Gewicht der Lebensmittel etwa 100 bis 300 g beträgt. Bei dieser Füllmenge werden vorteilhafte Zubereitungszeiten und eine genaue Abstimmung auf den aktuellen Bedarf an fertigen aufgewärmten Lebensmitteln ermöglicht.

In Zusammenhang mit dem erfindungsgemäßen Verfahren ist es günstig, wenn die flüssigen Speisekomponenten, welche mit den Lebensmitteln aus der Portionseinheit kombiniert werden können, ebenfalls in einem evakuierten und versiegelten Behältnis im Wasserbad erwärmt werden. Somit sind keine andersartigen Küchengeräte notwendig und es kann eine flexible Zuweisung zwischen Wasserbädern mit erfindungsgemäßen Portionseinheiten und solchen mit flüssigen Speisekomponenten erfolgen.

Für den Verzehr geeignete, essfertige und ausreichend warme Speisen können mit dem vorliegenden Verfahren zubereitet werden, wenn das bzw. die Behältnis(se) im Wasserbad auf zwischen 60 °C und 80 °C, vorzugsweise zwischen 65 °C und 75 °C, erwärmt werden. Insbesondere ist eine Erhitzung des Wasserbads auf höhere Temperaturen bis beispielsweise 100 °C nicht erforderlich, was für die Energieeffizienz der Herstellung von Vorteil ist.

Die Herstellung der Speise ist besonders einfach durchzuführen und zu überwachen, wenn das bzw. die Behältnis(se) eine vorbestimmte Zeit, vorzugsweise zwischen 10 und 20 min, insbesondere ca. 12 min, in dem Wasserbad erwärmt werden, und anschließend in einem Warmhaltefach aufbewahrt werden. Es kann somit beim Befüllen des Wasserbads eine Uhr gestellt werden, welche den Fortschritt und die verbleibende Erwärmungszeit verfolgt, so dass immer ein Überblick über die Anzahl und den Zustand der gerade im Wasserbad befindlichen Behältnisse gegeben werden kann.

Zur Bereitstellung einer aus nicht-flüssigen und flüssigen Komponenten bestehenden Speise ist es vorteilhaft, wenn neben der oben beschriebenen Portionseinheit ein weiteres flüssigkeits-, luftdichtes und zum Tiefkühlen geeignetes Behältnis vorgesehen ist, wobei in diesem gesonderten Behältnis eine bei Raumtemperatur flüssige Speisekomponente enthalten ist.

Wenn in einer ersten Portionseinheit die kohlenhydrathaltigen Lebensmittel sowie Gemüse und in der weiteren Portionseinheit Fleisch bzw. Tofu sowie die flüssige Speisekomponente enthalten sind, kann die Konsistenz der in der ersten Portionseinheit enthaltenen Lebensmittel beim Erwärmen erhalten bleiben, während dennoch auch die flüssige Speisekomponente mit ähnlichen Mitteln und somit ohne wesentlichen Mehraufwand gleichzeitig mit der nicht-flüssigen Komponente erwärmt werden kann. Eine besonders einfache Zubereitung ist dann gegeben, wenn die Inhalte der beiden Portionseinheiten zur Gänze die Teile einer Portion einer herzustellenden Speise bilden.

Die Erfindung wird nachfolgend anhand von besonders bevorzugten Ausführungsbeispielen, auf die sie jedoch nicht beschränkt sein soll, und unter Bezugnahme auf die Zeichnung noch weiter erläutert. In der Zeichnung zeigen dabei im Einzelnen:
Fig. 1 eine Vorderansicht einer erfindungsgemäßen Portionseinheit gefüllt mit Nudeln und Gemüse;
Fig. 2 eine Vorderansicht einer weiteren Portionseinheit zur Zubereitung einer Speise in Kombination mit der Portionseinheit gemäß Fig. 1;
Fig. 3 eine schaubildliche Ansicht eines Küchengeräts mit einem Wasserbad und vier Körben; und
Fig. 4 schematisch eine Betriebsküche mit Personal zur Illustration beispielhafter Herstellungsschritte im Rahmen des erfindungsgemäßen Verfahrens.

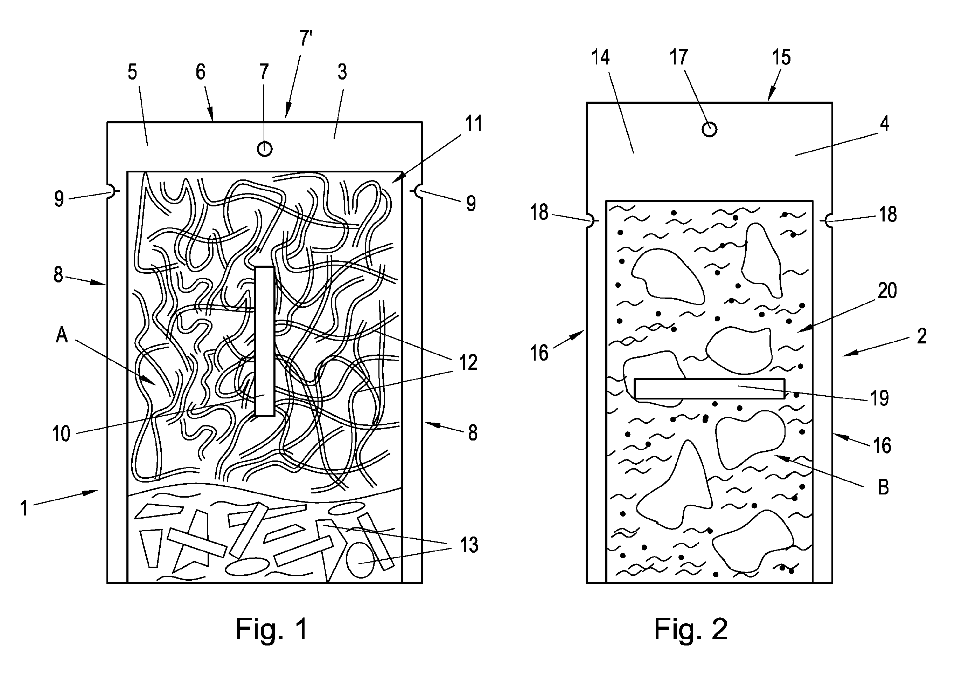

Bei einem bevorzugten Anwendungsbeispiel der Portionseinheit bzw. einer Kombination von Portionseinheiten ist die Aufnahme von Nudeln mit Gemüse (Komponente A) in einer Portionseinheit 1 vorgesehen, welche beispielhaft in Fig. 1 dargestellt ist. Weiters ist eine Sauce mit Hühnerfleisch (Komponente B) in einer getrennten Portionseinheit 2 vorgesehen, welche beispielhaft in Fig. 2 dargestellt ist. Komponente A ist blanchiert und tiefgefroren und Komponente B ist gekocht und ebenfalls tiefgefroren. Beide Komponenten A, B sind jeweils in einem hitzebeständigen Kunststoffbeutel 3, 4 verschweißt, mit dem sie jeweils eine Portionseinheit 1, 2 bilden.

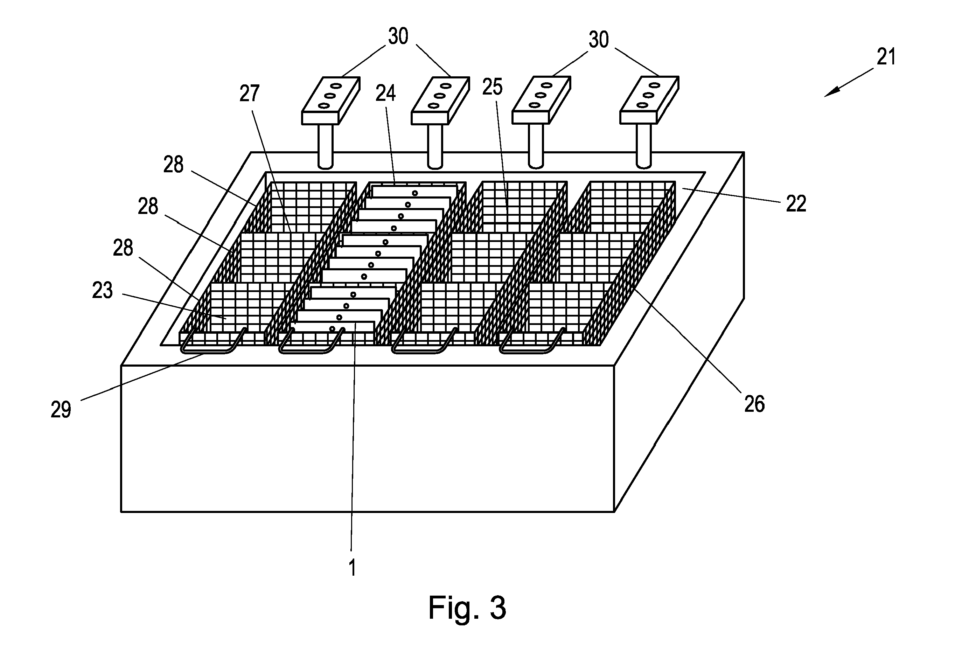

Der in Fig. 1 gezeigte Kunststoffbeutel 3 der Portionseinheit 1 mit Komponente A weist an drei Seiten einen Randabschnitt 5 auf und ist im Bereich des Randabschnitts mithilfe einer Siegelnaht versiegelt. Der obere, breitere Teil 6 des Randabschnitts 5 weist eine Ausnehmung 7 auf und bildet somit eine Grifflasche 7'. Die schmäleren Teile 8 des Randabschnitts 5 an den beiden Seiten des Kunststoffbeutels 3 weisen knapp unterhalb des breiteren Randabschnitteils 6 jeweils eine Aufreißhilfe in Form eines Y-Schnitts 9 auf, wobei anstelle der Y-Schnitte 9 auch V-Schnitte vorgesehen sein können. Der Kunststoffbeutel ist außerdem mit Kennzeichnungsinformationen 10 beschriftet. Die in Fig. 1 abgebildete Stellung mit der Grifflasche 7' an der Oberseite der Portionseinheit 1 entspricht der Stellung in einem Wasserbad (vgl. Fig. 3).

Der Kunststoffbeutel 3 ist beispielsweise 16 cm breit, 23,5 cm hoch und 1 bis 2 cm dick. Der mit der Komponente A gefüllte Hohlraum 11 des Kunststoffbeutels 3 ist in diesem Beispiel 14 cm breit und 21 cm hoch, so dass sich für die seitlichen schmalen Randabschnitte 8 eine Breite von jeweils 1 cm und für den oberen, breiten Randabschnitt 6 eine Breite von 2,5 cm ergibt. Die Aufreißhilfen 9 sind hier 3,5 cm unterhalb des oberen Randes des Kunststoffbeutels 3 und somit 1 cm unterhalb der Oberkante des Hohlraums 11 angeordnet. Die die Grifflasche 7' bildende Ausnehmung 7 beginnt etwa 1 cm unterhalb des oberen Randes des Kunststoffbeutels 3, ist im Wesentlichen kreisrund und weist einen Radius von etwa 3,5 mm auf. Der Kunststoffbeutel 3 besteht beispielsweise aus einer 90 µm dicken Polyethylen-Folie, insbesondere aus einer "Linear Low Density Polyethylene"-Folie (LLDPE-Folie), und ist mithilfe einer Siegelnaht verschlossen. Demzufolge ist der Kunststoffbeutel 3 lebensmittelecht, flüssigkeits- und luftdicht sowie zum Tieffrieren bis zu -18 °C sowie zur Erhitzung bis 100 °C geeignet.

Die im Kunststoffbeutel 3 aufgenommene Füllung bzw. Komponente A kann beispielsweise aus Nudeln 12 und Gemüse 13 bestehen, welche im Kunststoffbeutel 3 räumlich so aufgeteilt sind, dass das Gemüse 13 unterhalb der Nudeln 12 angeordnet ist. Die Nudeln sind blanchiert und tiefgefroren und enthalten z.B. Weizenmehl, Trinkwasser, modifizierte Stärke, Weizengluten, Speisesalz, Verdickungsmittel E415, Kurkumaextrakt, Karottensaftkonzentrat, Sojaöl und als Emulgator Sojalecithin. Die Nudeln können sowohl frisch als auch getrocknet oder extrudiert sein. Die Füllung kann aus einzelnen oder Kombinationen der folgenden kohlenhydrathältigen Lebensmitteln bestehen: vorblanchierte Nudeln, vorgekochter Reis, vorgekochte Gnocchi, Grießnockerl, Nockerl aus Mehl, Knödel, pikant oder süß gefüllte Knödel, Kartoffel, gefüllte Dim Sum Teigtaschen oder sonstige vorgekochte Kohlenhydrate. Außerdem können in der Füllung vorblanchiertes tiefkühlfestes Gemüse, wie Mais, Karotten, Fisolen, Zuckererbsen, Paprika, Schwarzwurzeln oder Spargel, sowie tiefkühlfeste Früchte, wie Mango, Apfel, Birne oder Beeren und tierische oder sonstige tiefkühlfeste Proteine, wie Hühnerfleisch, Rindfleisch, Schweinefleisch, Kaninchen, Ente, Garnelen, Fisch, Meeresfrüchte, Tofu oder modifiziertes Pflanzeneiweiß, enthalten sein. Die für die Befüllung der Portionseinheit 1 vorgesehenen Lebensmittel sind vorzugsweise soweit vorgekocht bzw. vorblanchiert, dass diese als küchenfertig und/oder essfertig gelten. Insbesondere werden die Lebensmittel nicht in getrockneter Form oder in einen perforierten Beutel eingebracht, da sie bei der Zubereitung nicht mit dem Wasser des Wasserbads reagieren sollen.

Beim Vorbereiten der Portionseinheit 1 wird der Beutel 3 zuerst mit den jeweiligen Lebensmitteln der Komponente A gefüllt. Danach wird der Kunststoffbeutel 3 durch die Siegelnaht verschlossen, vakuumiert bzw. mit Restsauerstoff oder modifizierter Atmosphäre (MAP) versetzt und tiefgefroren.

Die in Fig. 2 dargestellte Portionseinheit 2 mit der Komponente B umfasst einen im Vergleich zu Fig. 1 kleineren Kunststoffbeutel 4, welcher ebenfalls flüssigkeits- und luftdicht sowie zum Tiefkühlen geeignet ist. Der Kunststoffbeutel 4 weist ebenfalls einen Randabschnitt 14 mit einem breiten Teil 15 an einer Oberseite und zwei schmalen Teilen 16 an den beiden Seiten des Kunststoffbeutels 4 auf. Im breiten Randabschnittteil 15 ist eine Ausnehmung 17 angeordnet, so dass der Randabschnit eine Grifflasche bildet. In den schmalen Teilen 16 ist beidseits eine Aufreißhilfe in Form zweier Y-Schnitte 18 vorgesehen. Außerdem ist der Kunststoffbeutel 4 mit Kennzeichnungsinformationen 19 beschriftet.

Der Inhalt des Kunststoffbeutels 4, d.h. die Komponente B, kann außer der in Fig. 2 schematisch angedeuteten Sauce mit Hühnerfleisch auch andere Saucen (z.B. süß-saure Sauce mit Hühnerfleisch), Sugos, Toppings, Sirups, Säfte oder andere flüssige Speisekomponenten enthalten. Die Portionseinheit 2 mit der Komponente B erfährt dabei bevorzugt die gleiche Zubereitungsart wie die Portionseinheit 3 mit der Komponente A.

Der in Fig. 2 dargestellte kleinere Kunststoffbeutel 4 kann beispielsweise 12,5 cm breit und 24,5 cm hoch bzw. lang sein, wobei die seitlichen schmalen Randabschnittsteile 16 mit der Siegelnaht jeweils 1 cm breit und der obere, breite Randabschnittsteil 15 mit der Grifflasche 5 cm breit sein kann. Der mit Komponente B gefüllte Hohlraum 20 ist demzufolge 19,5 cm hoch und 10,5 cm breit, wobei die Y-Schnitte 18 etwa 1 cm unterhalb der Oberkante des Hohlraums 20 in den seitlichen Randabschnitten 16 angeordnet sind. Die hier kreisrunde Ausnehmung 17 kann z.B. 1 cm unterhalb des oberen Beutelrands beginnen und einen Radius von etwa 3,5 mm aufweisen.

In Fig. 3 ist beispielhaft ein Küchengerät 21 mit einem temperaturgesteuerten Wasserbad 22 gezeigt, wobei das Wasser immer eine bestimmte vorgegebene Temperatur aufweist bzw. gegebenenfalls auf diese Temperatur erwärmt wird. In dem Wasserbad sind vier Körbe 23, 24, 25, 26 versenkt. Der linke Korb 23 ist leer und es ist eine Unterteilung durch Zwischenwände 27 in drei Fächer 28 ersichtlich. Der Korb 24 rechts davon ist vollständig mit Portionseinheiten 1 mit der Komponente A gefüllt und enthält zwölf hintereinander geschlichtete Portionseinheiten 1, was in diesem Beispiel einer Maximalbelegung entspricht. Die Portionseinheiten 1 stehen so tief im Korb 24, dass sie völlig mit Wasser bedeckt sind, um einen ordnungsgemäßen Auftauvorgang zu garantieren. Die Grifflaschen der Portionseinheiten 1 mit den Ausnehmungen 7 zeigen nach oben, so dass beim Anheben des Korbs 24 am Griff 29 eine Portionseinheit 1 an der Grifflasche gefasst und aus dem Wasserbad 22 entnommen werden kann. Die beiden übrigen Körbe 25, 26 sind hier nur schematisch angedeutet und können ebenfalls Portionseinheiten 1 mit der Komponente A oder mit anderen Portionseinheiten, insbesondere mit Portionseinheiten 2 mit der Komponente B, gefüllt sein. Die Maximalbelegung eines Korbs mit Portionseinheiten 2 der Komponente B ist in dem hier beschriebenen Beispiel 18 Stück.

Jedem Korb ist eine Bedieneinheit 30 zugeordnet, an der beispielsweise die Art der Portionseinheiten gewählt werden kann. Die Bedieneinheiten können eingerichtet sein, die zur gewählten Art Aufwärmzeit zu erkennen und einen Zeitgeber mit einem Alarm zu starten, so dass das Ende der Aufwärmzeit signalisiert wird. Außerdem können die Bedieneinheiten gegebenenfalls eine den Portionseinheiten zugeordnete bevorzugte Aufwärmtemperatur ermitteln und die Steuerung des Wasserbads entsprechend verändern.

Zur Herstellung bzw. Zubereitung einer aus einer oder beiden Komponenten A, B bestehenden Speise werden beiden Komponenten A, B zwölf Minuten in verschlossenen Beuteln 3, 4 in einem Wasserbad mit einer Wassertemperatur von über 65 °C, bevorzugt von 75 °C, erwärmt bzw. erhitzt. Die Portionseinheiten 1, 2 können tiefgekühlt oder auch aufgetaut in das Wasserbad eingebracht werden. Das Wasserbad kann z.B. ein einfacher Topf mit Wasser oder ein temperaturgesteuertes Wasserbad 22 sein. Es ist wesentlich, dass es zwischen den in den Kunststoffbeuteln 3, 4 versiegelten Lebensmitteln und dem Wasser im Wasserbad keine direkte Interaktion gibt. Die Lebensmittel benötigen keine zusätzliche Wasseraufnahme z.B. aus dem Wasserbad.

Nach dem Erhitzen kann die Portionseinheit dem Wasserbad entnommen und geöffnet werden und die Lebensmittel sind essfertig. Alternativ kann eine Portionseinheit dem Wasserbad entnommen und bei mindestens 65 °C im Beutel bis zu einem Lieferzeitpunkt, nötigenfalls bis zu mehrere Stunden, heiß gehalten werden, bevor die Lebensmittel zum Verzehr angeboten werden. Sobald die Speise beispielsweise bestellt wurde und geliefert werden soll, wird zuerst der Beutel 3 mit Komponente A geöffnet und in eine Verkaufspackung gefüllt und dann der Beutel mit Komponente B geöffnet und über Komponente A in die Verkaufspackung gegeben. Anschließend kann der Inhalt der Verkaufspackung mit Salat garniert werden.

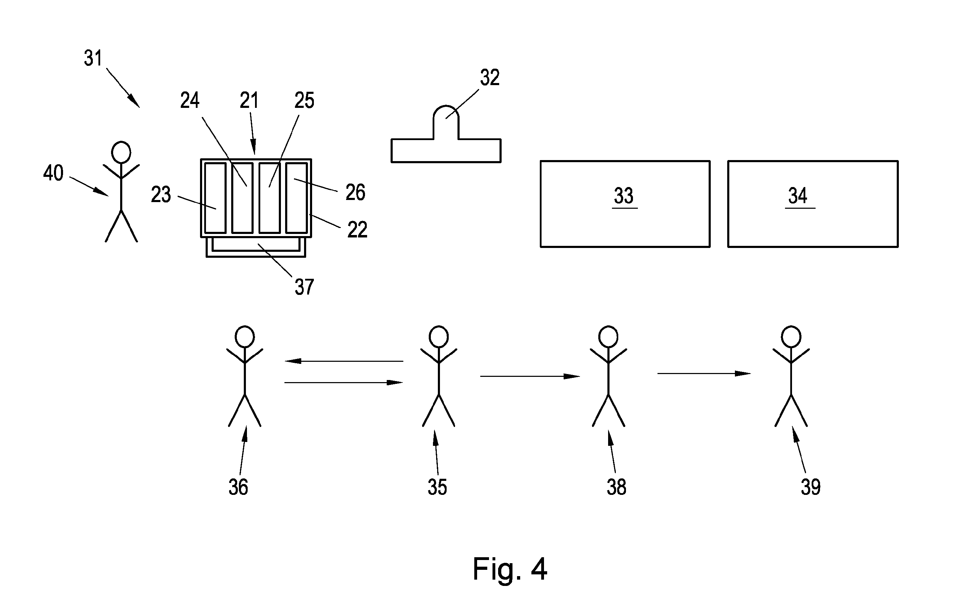

In Fig. 4 ist ein möglicher Ablauf in einer Betriebsküche 31 schematisch dargestellt. Die angedeutete Betriebsküche 31 ist beispielsweise mit einem Küchengerät 21 gemäß Fig. 3 ausgestattet. Außerdem ist die Küche 31 mit einer Auftragsanzeige 32, einem Garniertisch 33 und einem Warmhaltefach 34 ausgestattet. Sobald eine Bestellung eingeht, erscheint diese auf dem Initiator 32. Ein Mitarbeiter 35 des Küchenpersonals, im Folgenden Initiator genannt, erkennt die Bestellung und falls es sich dabei um eine nach dem erfindungsgemäßem Verfahren herstellbare Speise handelt, leitet er diese an den Mitarbeiter 36 am Küchengerät 21 weiter und quittiert die Bestellung. Dieser Mitarbeiter 36 stellt eine passende Verpackung in den Verpackungshalter 37 an der Vorderseite des Küchengeräts 21. Er hebt den Korb 24 mit Portionseinheiten 1 der Komponente A leicht (ca. 10 cm) an und entnimmt eine Portionseinheit 1, indem er sie am Plastikrand bzw. der Grifflasche 7' anfasst. Er öffnet die Portionseinheit 1 an der Aufreißhilfe 9 (vgl. Fig. 1) oder mithilfe eines speziellen Öffners (Pouchmate) (nicht dargestellt). Er lässt die Komponente A in die vorbereitete Verpackung gleiten und schüttelt diese kurz auf, um verklebte Stücke (z.B. Nudeln) zu lockern. Danach übergibt er die Verpackung samt Komponente A über den Initiator 35 an den "Chaser" 38.

Der Chaser 38 garniert beispielsweise eine Salatmischung auf der Komponente A in der Verpackung und gibt alles an den "Assembler" 39 weiter. Der Assembler 39 entnimmt eine Portionseinheit 2 mit einer Komponente B aus dem Warmhaltefach 34. Er öffnet die Portionseinheit 4 mittels der Aufreißhilfen 18 und leert den Kunststoffbeutel 4 in der Verpackung über die Salatmischung und Komponente A. Danach schließt der Assembler 39 die Verpackung und gibt sie an das Bedienpersonal weiter.

Der "Prep" 40 sorgt dafür, dass die Körbe 23, 24, 25, 26 im Wasserbad 22 immer ausreichend mit Portionseinheiten gefüllt sind. Außerdem entnimmt der Prep 40 fertig erwärmte Portionseinheiten 2 mit der Komponente B und legt diese in das Warmhaltefach 34 mit der Grifflasche nach vorne, maximal drei Beutel 4 nebeneinander und maximal vier Beutel 4 übereinander.

Es ist hier lediglich ein beispielhafter Ablauf für ein bestimmtes Rezept bestehend aus zwei Komponenten A, B und einer Salatmischung beschrieben. Davon ausgehend kann der Fachmann ohne Weiteres vergleichbare Abläufe für eine einzelne Komponente A oder auch umfangreichere Rezepte ableiten, welche hier - um Wiederholungen zu vermeiden - nicht weiter ausgeführt werden. Außerdem wird der Fachmann selbstständig die notwendigen Qualitätssicherungsmaßnahmen (Temperaturkontrollen, Nachmessung der notwendigen Zubereitungszeiten, Verteilung der Zutaten in den Portionseinheiten etc.) entwickeln und durchführen, so dass hier auch diesbezüglich weitere Ausführungen unterbleiben können.

## Patentansprüche

1. Portionseinheit (1) zur Zubereitung von Lebensmitteln in einem verpackten Zustand, mit einem im Wesentlichen flüssigkeits- und luftdichten Behältnis (3), in dem vorgekochte Lebensmittel (A) aufgenommen sind, wobei das Behältnis (3) evakuiert, versiegelt und zum Tiefkühlen geeignet ist, **dadurch gekennzeichnet, dass** die vorgekochten Lebensmittel (A) ohne Beigabe von bei Raumtemperatur im flüssigen Zustand befindlicher oder sich bei einer Erwärmung auf zumindest 60 °C verflüssigender Bestandteile in dem Behältnis (3) verpackt sind.

2. Portionseinheit nach Anspruch 1, **dadurch gekennzeichnet, dass** als Lebensmittel im Wesentlichen aus Kohlenhydraten bestehende Lebensmittel, insbesondere Teigwaren, Reis oder Kartoffel, vorgesehen sind.

3. Portionseinheit nach Anspruch 2, **dadurch gekennzeichnet**, die Teigwaren als Emulgator Sojalecithin aufweisen.

4. Portionseinheit nach einem der Ansprüche 1 bis 3, **dadurch gekennzeichnet, dass** als Lebensmittel Gemüse, Früchte, Fleisch, Tofu, oder dergleichen, insbesondere zusätzlich zu den kohlenhydrathaltigen Lebensmitteln, vorgesehen sind.

5. Portionseinheit nach einem der Ansprüche 1 bis 4, **dadurch gekennzeichnet, dass** das Behältnis (3) bis mindestens 75 °C, bevorzugt bis mindestens 100 °C, hitzebeständig ist und/oder neben den Lebensmitteln (A) auch Restsauerstoff oder modifizierte Atmosphäre enthält.

6. Portionseinheit nach einem der Ansprüche 1 bis 5, **dadurch gekennzeichnet, dass** mit dem Behältnis (3) eine Grifflasche (7') und eine Halterung, bevorzugt einstückig, verbunden ist und/oder das Behältnis (3) eine Öffnungshilfe (9), insbesondere einen V-Schnitt oder einen Y-Schnitt, aufweist.

7. Portionseinheit nach einem der Ansprüche 1 bis 6, **dadurch gekennzeichnet, dass** das Behältnis (3) mithilfe einer Siegelnaht verschlossen ist.

8. Portionseinheit nach einem der Ansprüche 1 bis 7, **dadurch gekennzeichnet, dass** das Behältnis (3) aus Nylon bzw. LLDPE (Linear Low Density Polyethylen) hergestellt ist, wobei die Wandstärke des Behältnisses (3) vorzugsweise 80 bis 90 µm beträgt.

9. Portionseinheit nach einem der Ansprüche 1 bis 8, **dadurch gekennzeichnet, dass** das Behältnis (3) samt Lebensmittelfüllung flach bzw. abgeflacht ist und eine Dicke von 1 bis 2 cm aufweist, wobei das Behältnis (3) insbesondere samt Lebensmittelfüllung im Wesentlichen quaderförmig mit vier schmalen und zwei breiten Seiten ist, und vorzugsweise die breiten Seiten des Behältnisses (3) eine Breite zwischen 10 und 15 cm und eine Höhe zwischen 18 und 23 cm aufweisen.

10. Portionseinheit nach Anspruch 9 , **dadurch gekennzeichnet, dass** das Behältnis (3) an zumindest einer schmalen Seite einen flachen Randabschnitt (5) mit einer Breite von bis zu 50 mm aufweist, wobei der Randabschnitt (5) bevorzugt eine Öffnungshilfe (9) und/oder eine Ausnehmung (7) zur Bildung einer Grifflasche (7') oder Halterung aufweist.

11. Portionseinheit nach einem der Ansprüche 1 bis 10, **dadurch gekennzeichnet, dass** das Gewicht der Lebensmittel etwa 100 bis 300 g beträgt.

12. Verfahren zur Herstellung einer essfertigen Speise mit einer Portionseinheit (1) gemäß einem der Ansprüche 1 bis 11, **dadurch gekennzeichnet, dass** das verschlossene Behältnis (3) in einem Wasserbad (22), vorzugsweise auf zwischen 60 °C und 80 °C, insbesondere auf zwischen 65 °C und 75 °C, erwärmt wird, aus dem Wasserbad (22) entnommen und geöffnet wird und mit einer bei Raumtemperatur flüssigen Speisekomponente (B) kombiniert wird.

13. Verfahren nach Anspruch 12, **dadurch gekennzeichnet, dass** die flüssigen Speisekomponenten (B) ebenfalls in einem evakuierten und versiegelten Behältnis (4) im Wasserbad (22) erwärmt werden.

14. Verfahren nach einem der Ansprüche 12 bis 13, **dadurch gekennzeichnet, dass** das bzw. die Behältnis(se) (3, 4) eine vorbestimmte Zeit, vorzugsweise zwischen 10 und 20 min, insbesondere ca. 12 min, in dem Wasserbad (22) erwärmt werden und anschließend in einem Warmhaltefach (34) aufbewahrt werden.

15. Kombination von Portionseinheiten mit einer Portionseinheit nach einem der Ansprüche 1 bis 11, **dadurch gekennzeichnet, dass** ein weiteres flüssigkeits-, luftdichtes und zum Tiefkühlen geeignetes Behältnis (4) vorgesehen ist, wobei in diesem gesonderte Behältnis (4) eine bei Raumtemperatur flüssige Speisekomponente (B) enthalten ist, wobei vorzugsweise in einer ersten Portionseinheit (1) die kohlenhydrathaltigen Lebensmittel sowie Gemüse und in der weiteren Portionseinheit (2) Fleisch bzw. Tofu sowie die flüssige Speisekomponente (B) enthalten sind.
